(19) Europäisches Patentamt
European Patent Office
Office européen des brevets

(11) **EP 3 255 614 A1**

(12) **DEMANDE DE BREVET EUROPEEN**

(43) Date de publication:
**13.12.2017 Bulletin 2017/50**

(21) Numéro de dépôt: **17174171.3**

(22) Date de dépôt: **02.06.2017**

(51) Int Cl.:
*G07C 9/00* *(2006.01)*          *H04L 9/32* *(2006.01)*
*H04L 29/06* *(2006.01)*        *G06F 21/32* *(2013.01)*
*G06Q 50/26* *(2012.01)*       *G06Q 10/00* *(2012.01)*

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **06.06.2016 FR 1655159**

(71) Demandeur: **Safran Identity & Security
92130 Issy-les-Moulineaux (FR)**

(72) Inventeurs:
• KEUFFER, Julien, Paul
  92130 Issy Les Moulineaux (FR)
• CHABANNE, Hervé
  92130 Issy Les Moulineaux (FR)
• LESCUYER, Roch
  92130 Issy Les Moulineaux (FR)

(74) Mandataire: **Regimbeau
20, rue de Chazelles
75847 Paris Cedex 17 (FR)**

(54) **PROCÉDÉ DE VERIFICATION D'UN DROIT D'ACCÈS D'UN INDIVIDU**

(57)     L'invention propose un procédé de vérification d'un droit d'accès d'un individu comprenant la mise en oeuvre, avant que l'individu ne se présente en un point de contrôle, des étapes suivantes:
- acquisition, par un dispositif client, d'une donnée biométrique sur l'individu, et transmission de ladite donnée à un serveur de calcul distant,
- mise en oeuvre, par le serveur de calcul distant, d'un protocole de calcul vérifiable publiquement et à divulgation nulle de connaissance, comprenant :
○ le calcul d'une fonction comprenant un calcul de distance entre la donnée biométrique et chacune d'une pluralité de données de référence, la comparaison de chaque distance à un seuil prédéterminé, et la génération d'un résultat indiquant si au moins l'une des distances calculées est inférieure audit seuil,
○ la génération, à partir de ladite fonction, d'une preuve d'exactitude du calcul de la fonction,

- transmission, par le serveur de calcul distant, du résultat du calcul de la fonction et de la preuve d'exactitude du calcul au dispositif client,
et le procédé comprend la mise en oeuvre des étapes suivantes, lorsque l'individu se présente au point de contrôle:
- transmission, par le dispositif client, de la donnée acquise sur l'individu, du résultat du calcul et de la preuve à une unité de traitement d'une autorité de contrôle,
- vérification, par l'unité de traitement, de l'exactitude du résultat, à partir de la preuve.

EP 3 255 614 A1

**Description**

DOMAINE DE L'INVENTION

L'invention concerne un procédé de vérification d'un droit d'accès d'un individu à une zone délimitée par un point de contrôle géré par une autorité de contrôle. L'invention s'applique notamment à la vérification du droit d'un individu de franchir une frontière et/ou d'embarquer à bord d'un moyen de transport.

ETAT DE LA TECHNIQUE

Lors de l'embarquement d'un individu à bord d'un moyen de transport, typiquement un avion, il est connu que l'individu s'enregistre pour le vol qu'il va emprunter, puis franchisse au moins un point de contrôle au cours duquel son identité est vérifiée par une autorité de contrôle telle que la compagnie aérienne en charge du vol pour vérifier son droit à embarquer. L'identité peut également être vérifiée par une autorité douanière dans le cas où le déplacement de l'individu implique un franchissement de frontière.

Cette vérification peut être effectuée en cherchant une correspondance entre une donnée biométrique générée à partir d'un trait biométrique de l'individu, et une pluralité de données biométriques de référence, correspondant typiquement aux individus enregistrés pour le vol.

Au terme de cette recherche de correspondance, l'individu peut être formellement identifié, c'est-à-dire que son identité est déterminée - on parle alors d'identification biométrique. En variante, il peut suffire d'obtenir une information selon laquelle l'individu correspond à au moins l'une des personnes desquelles proviennent les données biométriques de référence, sans que l'identité exacte de l'individu n'ait été déterminée, pour que l'individu soit considéré comme ayant le droit de franchir le point de contrôle.

La comparaison de données biométriques d'individu lors d'un contrôle d'accès, bien qu'avantageuse du point de vue de la sécurité, peut s'avérer chronophage.

Par exemple, des techniques parmi les plus récentes et les plus efficaces comprennent l'utilisation de réseaux de neurones pour générer à partir d'une image de visage d'un individu une donnée biométrique, sous la forme d'un vecteur. Le vecteur est ensuite comparé à une autre donnée biométrique par un calcul d'un produit scalaire entre les vecteurs correspondants aux deux données biométriques, et la comparaison du résultat par rapport à un seuil prédéterminé.

Ceci doit être répété pour la comparaison d'une donnée d'un individu à l'ensemble des données biométriques de références auxquelles elle doit être comparée.

Or, la prévision d'un trafic aérien en constante augmentation dans les prochaines années suscite des interrogations sur la capacité des aéroports à gérer ce trafic. Malgré cette augmentation, il est en effet souhaité de réduire les files d'attente et les délais d'attentes aux points de contrôles pour les passagers, tout en conservant une bonne sécurité des données.

Le développement de plus en plus répandu de dispositifs électroniques personnels aux passagers de type téléphones mobiles ou tablettes inciterait à déporter l'étape chronophage de comparaison biométrique en amont du franchissement du point de contrôle par un individu, en mettant en oeuvre cette étape au moyen de son dispositif électronique personnel.

Néanmoins, la puissance de calcul d'un tel dispositif peut s'avérer insuffisante pour que celui-ci puisse, dans un temps acceptable par l'utilisateur, mettre en oeuvre l'opération de comparaison biométrique.

De plus, se pose alors la question de la confidentialité des données qui sont manipulées lors de la comparaison. Il est également nécessaire de fournir à l'autorité de contrôle des garanties suffisantes sur la fiabilité et l'exactitude du calcul ainsi effectué lors du franchissement du point de contrôle.

Il existe donc un besoin pour un procédé de contrôle d'accès comprenant une comparaison de données biométriques, permettant de réduire le temps de franchissement d'un point de contrôle par un individu tout en étant acceptable par l'individu et en fournissant suffisamment de garanties sur la sécurité de la comparaison à l'autorité de contrôle.

PRESENTATION DE L'INVENTION

L'invention a pour but de remédier au problème exposé ci-dessus.

A cet égard, l'invention a pour objet un procédé de vérification d'un droit d'accès d'un individu à une zone délimitée par au moins un point de contrôle géré par une autorité de contrôle, caractérisé en ce qu'il comprend la mise en oeuvre, avant que l'individu ne se présente au point de contrôle, des étapes suivantes:

- acquisition, par un dispositif client, d'une donnée biométrique sur l'individu, et transmission de ladite donnée à un serveur de calcul distant,
- mise en oeuvre, par le serveur de calcul distant, d'un protocole de calcul qui d'une part est vérifiable publiquement et qui d'autre part est à divulgation nulle de connaissance, le protocole de calcul comprenant :

  ◦ le calcul d'une fonction comprenant un calcul de distance entre la donnée biométrique acquise sur l'individu et chacune d'une pluralité de données biométriques de référence, la comparaison de chaque distance à un seuil prédéterminé, et la génération d'un résultat indiquant si au moins l'une des distances calculées est inférieure audit seuil, et
  ◦ la génération, à partir de ladite fonction, d'une preuve d'exactitude du calcul de la fonction,

- transmission, par le serveur de calcul distant, du résultat du calcul de la fonction et de la preuve d'exactitude du calcul au dispositif client,

et le procédé comprend la mise en oeuvre des étapes suivantes, lorsque l'individu se présente au point de contrôle:

- transmission, par le dispositif client, de la donnée biométrique acquise sur l'individu, du résultat du calcul de la fonction et de la preuve d'exactitude du calcul à une unité de traitement de l'autorité de contrôle, et
- vérification, par l'unité de traitement de l'autorité de contrôle, de l'exactitude du résultat, à partir dudit résultat, de la donnée biométrique et de la preuve.

Avantageusement, mais facultativement, le procédé selon l'invention peut en outre comprendre au moins l'une des caractéristiques suivantes :

- l'autorité de contrôle peut autoriser le franchissement du point de contrôle par l'individu si le résultat du calcul de la fonction est exact.
- le protocole de calcul vérifiable à divulgation nulle de connaissance peut être le protocole dit Pinocchio ou le protocole dit Gepetto.
- Le procédé peut en outre comprendre une étape préliminaire d'enrôlement au cours de laquelle le dispositif client transmet au serveur de calcul distant au moins une donnée d'identité de l'individu et une donnée biométrique de l'individu certifiée par l'autorité de contrôle, et le serveur de calcul enregistre la donnée biométrique de l'individu comme donnée biométrique de référence.

- Le procédé peut en outre comprendre la mise en oeuvre d'au moins une vérification de sécurité à partir de la donnée d'identité de l'individu et/ou de la donnée biométrique de l'individu obtenue à partir du document d'identité.
- l'étape de transmission de la donnée biométrique acquise sur l'individu au serveur de calcul distant peut être mise en oeuvre de manière sécurisée.
- l'autorité de contrôle peut être une autorité douanière ou une entreprise de transport.
- Le procédé peut en outre comprendre, lorsque l'individu se présente au point de contrôle de l'autorité de contrôle, une étape au cours de laquelle l'unité de traitement de l'autorité de contrôle acquiert une donnée biométrique sur l'individu et compare ladite donnée à la donnée transmise par le dispositif client, l'étape de vérification du résultat du calcul de la fonction n'étant mise en oeuvre qu'en cas de correspondance desdites données.

L'invention a également pour objet un système de vérification d'un droit d'accès d'un individu, comprenant :

- un serveur de calcul, comprenant un calculateur et une interface de communication à distance, le calculateur étant adapté pour calculer une fonction comprenant un calcul de distance entre au moins deux données biométriques, et la comparaison de chaque distance à un seuil prédéterminé, et pour générer une preuve d'exactitude du calcul de la fonction,
- une unité de traitement adaptée pour effectuer une vérification du calcul de la fonction à partir de la preuve d'exactitude et du résultat du calcul, et
- un dispositif client, adapté pour acquérir une donnée biométrique sur un individu et pour communiquer avec le serveur de calcul et l'unité de traitement,

ledit système étant adapté pour la mise en oeuvre du procédé selon la description qui précède.

Selon un autre objet, l'invention concerne également un produit programme d'ordinateur, comprenant des instructions de code pour la mise en oeuvre d'un procédé comprenant des étapes de :

- acquisition d'une image d'un trait biométrique et génération à partir de ladite image d'une donnée biométrique,
- transmission à un serveur distant de ladite donnée biométrique,
- réception d'un résultat de calcul d'une fonction par le serveur distant et d'une preuve d'exactitude du résultat, et
- transmission de la donnée biométrique, du résultat de calcul et de la preuve à une unité de traitement,

quand il est mis en oeuvre par un calculateur.

L'invention proposée permet de réduire le temps de franchissement d'un point de contrôle par un individu, en déportant une étape de comparaison d'une donnée biométrique de l'individu à des données de référence en amont du franchissement de ce point de contrôle. En mettant en oeuvre le calcul au moyen d'un protocole vérifiable publiquement et à divulgation nulle de connaissance, il est possible de garantir que cette comparaison est mise en oeuvre de manière fiable et sécurisée, et de permettre à l'autorité de contrôle de vérifier le résultat du calcul.

De plus, la mise en oeuvre du calcul et de la preuve d'exactitude du calcul par un serveur distant permet de recourir à une puissance de calcul plus importante que celle d'un dispositif électronique personnel à l'individu franchissant le point de contrôle. Cela permet également de ne pas mobiliser ce dispositif électronique pendant la durée du calcul, et donc de ne pas gêner l'individu.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- La figure 1 représente schématiquement un système de contrôle d'accès d'un individu dans un contexte de mise en oeuvre d'un procédé de contrôle d'accès,
- La figure 2 représente schématiquement les principales étapes d'un procédé de contrôle d'accès d'un individu.

DESCRIPTION DETAILLEE D'AU MOINS UN MODE DE MISE EN OEUVRE DE L'INVENTION

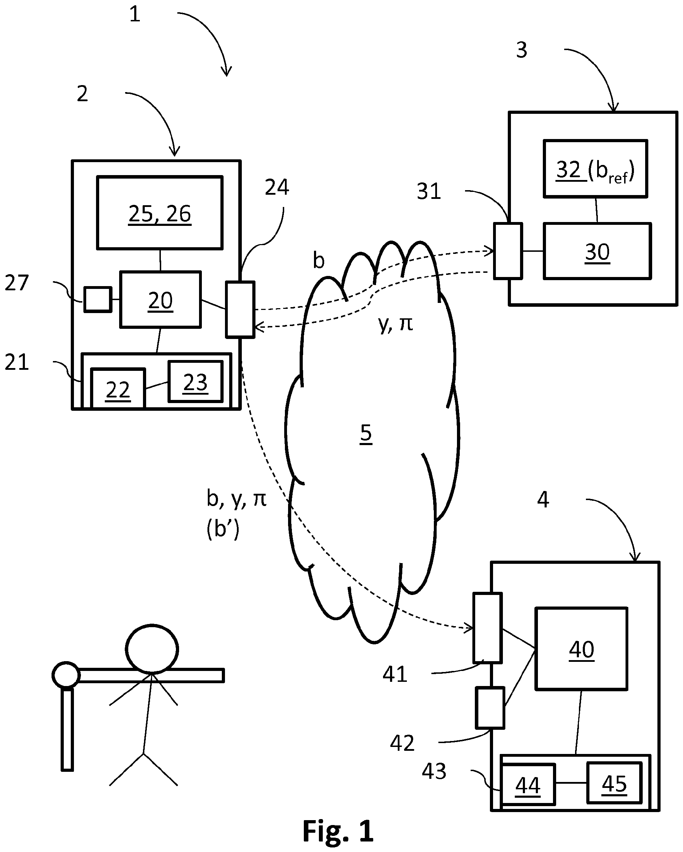

En référence à la figure 1, on a représenté schématiquement un système de contrôle d'accès 1 d'un individu, comprenant un dispositif client 2, un serveur de calcul distant 3, et une unité de traitement 4 d'une autorité de contrôle.

L'autorité de contrôle peut par exemple être une autorité douanière ou une entreprise de transport. Typiquement, dans une situation où un individu cherche à embarquer à bord d'un avion, il peut s'agir d'une compagnie aérienne.

L'invention s'applique de manière analogue à l'utilisation de tout type de moyen de transport. Le contrôle d'accès de l'individu permet de vérifier le droit de l'individu à pénétrer dans une zone qui est délimitée par un point de contrôle généré par l'autorité de contrôle. Cette zone peut être un pays, ou une porte d'embarquement dans un aéroport, etc.

Le dispositif client 2, le serveur de calcul 3 et l'unité de traitement 4 sont susceptibles d'être reliés entre eux par un réseau de communication 5, par exemple internet.

Le dispositif client 2 est avantageusement un dispositif électronique personnel à un individu, par exemple du type téléphone mobile, tablette numérique, etc. Ce dispositif client 2 est avantageusement portable.

Le dispositif client 2 comprend un calculateur 20, tel que par exemple un processeur, un microprocesseur, un contrôleur, etc. Le calculateur 20 est adapté pour exécuter des instructions de code, de préférence sous la forme d'une application logicielle téléchargeable depuis un serveur, pour la mise en oeuvre du procédé décrit ci-après. L'application logicielle est de préférence certifiée par l'autorité de contrôle.

Il comporte également un module 21 d'acquisition d'une donnée biométrique sur un trait biométrique d'un individu. Le trait biométrique peut être la forme du visage ou un ou plusieurs iris de l'individu.

Le module 21 d'acquisition de donnée biométrique comprend un capteur d'image 22, et un module de traitement d'image 23 qui est adapté pour extraire une donnée biométrique à partir d'une image d'un trait biométrique. Ce module 23 est avantageusement une série d'instructions exécutables par le calculateur 20, par exemple un module logiciel.

L'extraction de la donnée biométrique est mise en oeuvre par un traitement de l'image du trait biométrique qui dépend de la nature du trait biométrique.

Des traitements d'images variés pour extraire des données biométriques sont connus de l'Homme du Métier. A titre d'exemple non limitatif, dans le cas où le trait biométrique est l'image du visage de l'individu, l'extraction de la donnée biométrique peut être mise en oeuvre par application à l'image d'un réseau de neurones convolutif (connu sous l'acronyme anglais CNN pour convolution neural network), préalablement entrainé sur une base de données.

Enfin le dispositif client 2 comprend une interface de communication à distance 24 avec le serveur de calcul distant 3 et le cas échéant avec l'unité de contrôle 4. Cette interface est avantageusement adaptée pour permettre une communication sans fil avec le serveur distant 3, par exemple par Wifi ou Bluetooth ou via un réseau de téléphonie mobile (GPRS, 3G, 4G ou autre).

Eventuellement le dispositif client 2 peut également communiquer avec l'unité de contrôle 4 au moyen d'une interface d'affichage d'informations 25 telle qu'un écran, affichant des informations à transmettre à l'unité de contrôle 4. La communication pourrait également être mise en oeuvre au moyen d'une interface physique, telle que par exemple une liaison Ethernet ou un port USB, mais ce type de communication étant plus lente à cause de la nécessité de réaliser des branchements, elle est moins préférée.

Avantageusement, mais facultativement, le dispositif client 2 peut enfin comprendre une interface de saisie d'informations 26 telle qu'un clavier, un écran tactile, etc.

Enfin le dispositif client 2 comprend avantageusement un lecteur 27 de puce d'un document d'identité, typiquement un lecteur utilisant la technologie de communication en champ proche ou NFC (acronyme anglais de Near Field Communication).

Le dispositif client 2 comprend également une mémoire (non représentée).

Le serveur de calcul distant 3 comporte un calculateur 30 adapté pour mettre en oeuvre les calculs décrits ci-après, et pouvant être par exemple un processeur, un microprocesseur, un contrôleur, etc. Le serveur de calcul distant 3 comporte également une interface de communication à distance 31 avec le dispositif client 2, adaptée pour mettre en oeuvre le même protocole de communication que l'interface 24 du dispositif client, c'est-à-dire par exemple pour communiquer par Wifi, Bluetooth, ou via un réseau de téléphonie mobile (GPRS, 3G, 4G etc.).

Le serveur de calcul distant 3 comprend également, ou peut accéder à, une mémoire 32 comprenant un ensemble de données biométriques de référence.

L'unité de traitement 4 comporte un calculateur 40, par exemple de type processeur, microprocesseur, contrôleur, etc. Elle peut comprendre une interface de communication 41 avec le dispositif client qui peut être une interface de communication à distance, par exemple par Wifi, Bluetooth ou via un réseau de télécommunication, ou une interface physique telle qu'une liaison Ethernet ou un port USB. L'interface de communication 41 peut également être formée par un module d'acquisition et de traitement d'informations affichées sur un écran du dispositif client.

Avantageusement, l'unité de traitement 4 permet de contrôler un point de contrôle d'un individu, qui peut être matérialisé par une barrière, un portique, un indicateur lumineux etc. Le point de contrôle constitue un obstacle à l'accès à la zone qui n'est franchi qu'en cas de succès du contrôle de l'individu. Par exemple, le point de contrôle peut être un poste de contrôle douanier disposé à la frontière d'un état ou dans un aéroport.

Le point de contrôle peut également être un point de contrôle d'une entreprise de transport telle qu'une compagnie aérienne, localisé dans un terminal d'embarquement et autorisant l'accès de l'individu au moyen de transport, par exemple à l'avion, dans lequel il doit embarquer.

L'unité de traitement peut alors comporter une interface de contrôle 42 du point de contrôle permettant d'autoriser ou d'interdire le franchissement du point de contrôle par l'individu par ouverture/fermeture d'une barrière ou d'un portique ou affichage d'informations.

Dans le cas où l'interface de communication 41 avec le dispositif client est une interface physique ou un module d'acquisition d'informations affichées sur un écran du dispositif client 2, cette interface est disposée au niveau du point de contrôle. Le calculateur 40 peut en revanche être localisé à distance de cette interface.

L'unité de traitement 4 peut également comprendre un module 43 d'acquisition d'une donnée biométrique, comprenant un capteur d'image 44, et un module 45 de traitement d'une image d'un trait biométrique pour en extraire une donnée biométrique. Ce module est avantageusement une série d'instructions exécutables par le calculateur 40, par exemple un module logiciel.

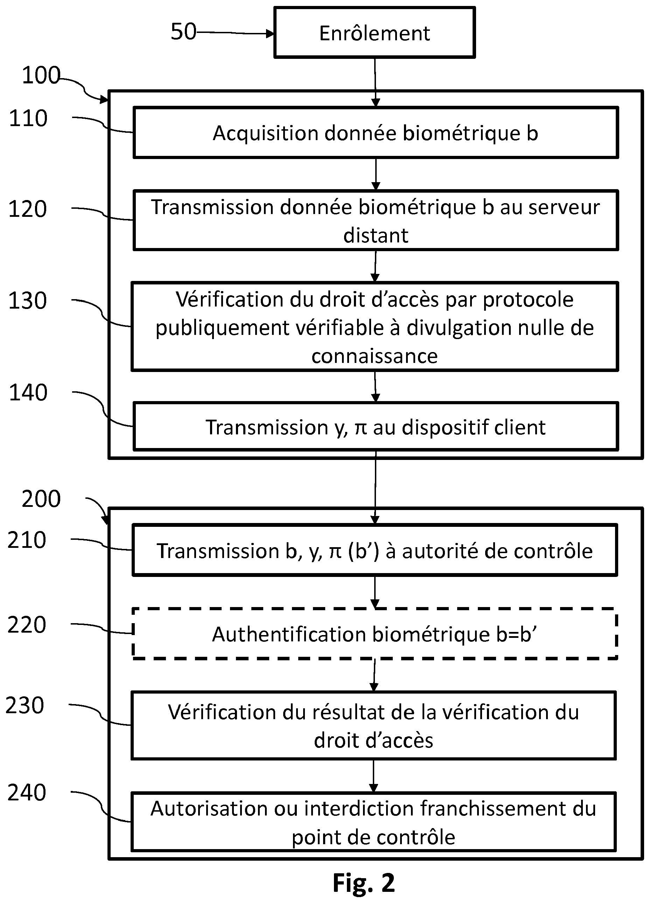

En référence à la figure 2, on va maintenant décrire un procédé de contrôle d'accès pouvant être mis en oeuvre par le système décrit ci-avant.

Le procédé comporte une vérification du droit d'accès de l'individu comprenant la comparaison d'une donnée biométrique acquise sur l'individu à un ensemble de données biométriques de référence dans le but de détecter une correspondance entre deux données pour déterminer que l'individu correspond à l'un des individus à partir desquels les données de référence ont été acquises.

Le résultat de cette vérification biométrique est fourni à l'autorité de contrôle, et en cas de succès, celle-ci autorise le franchissement du point de contrôle par l'individu.

Comme on va le voir, les calculs pour réaliser la vérification par la comparaison de la donnée biométrique de l'individu aux données de référence sont déportés au serveur de calcul 3.

Pour ce faire, le procédé comporte une première série d'étapes 100 mise en oeuvre avant que l'individu ne se présente auprès du point de contrôle. Par exemple, ces étapes peuvent être mises en oeuvre avant ou lors de l'arrivée d'un individu dans un terminal d'embarquement ou un poste de contrôle de la frontière.

Une première étape 110 de cette série comprend l'acquisition d'une donnée biométrique sur un trait biométrique de l'individu. Cette étape est mise en oeuvre par le dispositif client 2. De préférence, dans le cas où le dispositif client est un dispositif personnel à l'individu, l'individu met en oeuvre cette étape lui-même en prenant une photographie de son trait biométrique, c'est-à-dire par exemple de son visage ou de son iris. Le module 23 de traitement d'image du dispositif client 2 traite ensuite l'image pour obtenir une donnée biométrique b sous la forme d'un vecteur comprenant un ensemble de composantes.

Une deuxième étape 120 de la série 100 comprend la transmission, par le dispositif client 2 au serveur de calcul 3, de la donnée biométrique acquise b. Cette étape est avantageusement mise en oeuvre de manière sécurisée pour garantir la confidentialité de la donnée b. Par exemple la sécurisation de la communication peut être obtenue en appliquant le protocole TLS (acronyme anglais de Transport Layer Security).

Le serveur de calcul 3 peut ensuite mettre en oeuvre une vérification 130 du droit d'accès de l'individu, par comparaison de la donnée biométrique reçue b à un ensemble de données biométriques de référence bref. Les données biométriques de référence bref ont été obtenues sur des traits biométriques de même nature que la donnée biométrique b. Elles sont aussi des vecteurs comprenant un nombre de composantes identiques au nombre de composantes de la donnée b.

La comparaison est mise en oeuvre de manière classique en soi en calculant, entre la donnée biométrique b et chaque donnée biométrique de référence bref, une distance, par exemple par le calcul d'un produit scalaire entre les données biométriques, et en comparant chaque distance à un seuil prédéterminé. Dans le cas où une distance est inférieure au seuil, une correspondance est détectée entre la donnée biométrique de l'individu et l'une des données de référence. Cette information peut suffire pour déterminer que l'individu a ou non le droit de franchir le point de contrôle, sans qu'il soit nécessaire de déterminer l'identité de l'individu. Par conséquent il suffit que la distance entre la donnée biométrique de l'individu et l'une des données biométriques de référence soit inférieure au seuil pour considérer que l'individu a le droit d'accéder à la zone et de franchir le point de contrôle.

De préférence, pour que la vérification soit réalisée avec succès, la série d'étapes 100 a été précédée d'un enrôlement 50 de l'individu auprès du serveur de calcul 3, qui peut correspondre à une étape d'enregistrement dans le cas où l'individu s'apprête à emprunter un moyen de transport tel qu'un avion. Cette étape peut avoir été réalisée le jour même ou un jour précédent dans un lieu quelconque, par exemple au domicile de l'individu.

Cet enrôlement comprend l'envoi par le dispositif client 2 au serveur de calcul 3 d'une donnée biométrique certifiée par l'autorité de contrôle, qui est typiquement une donnée biométrique enregistrée dans la puce d'un document d'identité tel qu'un passeport. Cette donnée est acquise au moyen du module 27 du dispositif client 2.

Cette donnée biométrique qui constitue une donnée biométrique de référence pour l'individu, est enregistrée dans la mémoire du serveur de calcul 3, et permet donc ensuite de confirmer le droit d'accès de l'individu car elle est normalement suffisamment proche de la donnée biométrique b acquise sur l'individu pour que la distance avec cette donnée soit inférieure au seuil pour la vérification.

Avantageusement, l'enrôlement 50 comprend également l'envoi au serveur de calcul 3 d'informations complémentaires telles que par exemple le nom de l'individu, un numéro de document d'identité, la nationalité, éventuellement une information sur le moyen de transport utilisé ou la référence du voyage (numéro de vol, etc.). Ces différentes informations permettent d'effectuer des vérifications de sécurité concernant l'individu, comme par exemple la vérification que l'individu a le droit de voyager, de franchir la frontière d'un pays, etc.

De retour à l'étape de vérification biométrique 130 du droit d'accès de l'individu, le serveur de calcul 3 met en oeuvre cette étape par l'exécution d'un protocole de calcul publiquement vérifiable et à divulgation nulle de connaissance.

Le caractère publiquement vérifiable du protocole permet de produire une preuve que le calcul réalisé entre la donnée biométrique b et les données biométriques de référence bref est exact, et permet à n'importe qui ayant accès à la clé de vérification publique de vérifier l'exactitude du résultat du calcul.

Par ailleurs, dans un protocole de calcul publiquement vérifiable, l'entité réalisant la preuve doit fournir à l'entité réalisant la vérification les données d'entrée de son calcul pour que l'entité de vérification puisse étudier la validité de la preuve. Comme décrit plus en détails ci-après, cela correspondrait ici à fournir entre autres la base des données biométriques de référence. Or la divulgation nulle de connaissance permet de conserver la confidentialité de cette base en prouvant que l'entité réalisant la preuve a effectivement eu accès la base pour réaliser le protocole de calcul, tout en ne donnant aucune information sur les données de référence contenues dans cette base.

Avantageusement, un mode de réalisation de ce protocole est le protocole Pinocchio présenté dans la publication « Bryan Parno, Craig Gentry, Jon Howell, and Mariana Raykova, Pinocchio: Nearly Practical Verifiable Computation, in Proceedings of the IEEE Symposium on Security and Privacy, IEEE, 21 May 2013 », et à laquelle on pourra se référer pour une description complète du protocole.

En résumé, le protocole Pinocchio comprend la mise en oeuvre des étapes suivantes.

La fonction F à calculer (en l'occurrence le calcul de chaque distance et la comparaison de chaque distance au seuil prédéterminé) est représentée sous forme d'un circuit arithmétique ne comprenant que des opérateurs d'addition et de multiplication définis sur un corps fini $\mathbb{F}_p$ .

Puis un programme arithmétique quadratique (ou QAP pour « Quadratic Arithmetic Program ») est construit à partir du circuit arithmétique. Pour ce faire, chaque opérateur de multiplication du circuit arithmétique est décrit au moyen de trois polynômes codant respectivement les deux entrées de l'opérateur et la sortie de l'opérateur (les opérateurs d'addition étant pris en compte dans la définition des polynômes). On note $\mathcal{V}, \mathcal{W}, \mathcal{Y}$ trois ensembles de polynômes encodant respectivement les deux entrées et les sorties des opérateurs.

Un quatrième polynôme dit polynôme cible T est construit comme suit :

$$T(x) = \prod_G (x - r_G)$$

Où $r_G \in \mathbb{F}_\ell$ est une racine arbitraire d'un opérateur G du circuit arithmétique.

Le protocole Pinocchio est à divulgation nulle de connaissance en ajoutant à chaque polynôme des ensembles $\mathcal{V}, \mathcal{W}, \mathcal{Y}$ un multiple aléatoire du polynôme cible T.

Les ensembles de polynômes $\mathcal{V}, \mathcal{W}, \mathcal{Y}$ ainsi que le polynôme cible T forment le QAP. On pourra se référer à la section 2.2.1. de la publication citée ci-avant pour plus de détails à cet égard.

De préférence, ces étapes de construction sont mises en oeuvre par le serveur de calcul 3 pour être mises en commun pour plusieurs dispositifs client différents.

Comme décrit plus en détails dans la publication citée ci-avant, chaque polynôme $V_k(x) \in \mathbb{F}_p[x]$ du QAP est lié à un élément $g^{V_k(s)}$ d'un groupe bilinéaire où g est un générateur du groupe et s est un secret choisi aléatoirement.

Une clé publique d'évaluation $EK_F$ et une clé publique de vérification $VK_F$ sont construites à partir de ces éléments, par exemple par le serveur de calcul 3.

Le serveur de calcul utilise ensuite la clé publique d'évaluation pour évaluer le circuit arithmétique pour la fonction F, et obtient un résultat booléen y dont la valeur indique si la donnée biométrique de l'individu correspond à au moins une donnée biométrique de référence, c'est-à-dire si la distance entre la donnée de l'individu et au moins l'une des données biométriques de référence est inférieure au seuil prédéterminé.

Le serveur de calcul génère également une preuve $\pi$ du résultat du calcul à partir du QAP, et donc à partir de la définition de la fonction F. Par sa construction (voir encore la section 2.3 de la publication citée ci-avant), la preuve permet de vérifier que le résultat y a été obtenu à partir de la donnée b.

L'entité devant vérifier le calcul - ci-après, l'autorité de contrôle - met en oeuvre une vérification de l'exactitude du calcul à partir de la clé publique de vérification $VK_F$, de la donnée biométrique b, de la preuve $\pi$, et du résultat booléen y (on pourra se référer à la section 2.3 de la publication citée ci-avant pour plus de détails).

En variante, un autre protocole publiquement vérifiable et à divulgation nulle de connaissance également utilisable dans le cadre de l'invention est le protocole Gepetto, qui est une variante du protocole Pinocchio, et qui a été présenté dans la publication « Craig Costello, Cedric Fournet, Jon Howell, Markulf Kohlweiss, Benjamin Kreuter, Michael Naehrig, Bryan Parno, and Samee Zahur, Geppetto: Versatile Verifiable Computation, in Proceedings of the IEEE Symposium on Security and Privacy, IEEE, 18 May 2015 ». On pourra se référer à cette publication pour une description détaillée de l'implémentation de ce protocole.

Un autre protocole publiquement vérifiable et à divulgation nulle de connaissance également utilisable dans le cadre de l'invention est celui décrit dans la demande de brevet FR1560942 déposée le 16 novembre 2015, dans le cas où les données biométriques utilisées pour le contrôle d'accès sont des données biométriques générées à partir d'images d'iris d'individus.

Dans tous les cas, à l'issue de la mise en oeuvre du protocole, le serveur de calcul 3 dispose du résultat y du calcul de la fonction F qui est un booléen indiquant si une correspondance a été réalisée entre l'individu et au moins un individu enrôlé dans la base de données biométriques de référence, et une preuve $\pi$ de l'exactitude du résultat du calcul.

Le procédé comprend ensuite une étape 140 de transmission, par le serveur de calcul 3 au dispositif client 2 du résultat y et de la preuve $\pi$ de l'exactitude du résultat du calcul. Cette transmission être mise en oeuvre de manière sécurisée via le même canal de communication sécurisé qu'utilisé dans l'étape 120, toutefois cela n'est pas nécessaire dans la mesure où la preuve $\pi$ ne comprend aucune référence explicite aux données biométriques de référence et que le résultat y ne comprend que l'information selon laquelle l'individu a été ou non reconnu comme l'un des individus de la base de données biométriques de référence.

Bien que la mise en oeuvre du protocole, pour réaliser la comparaison biométrique et calculer la preuve, nécessite un temps de calcul de l'ordre de plusieurs minutes, le fait que ce protocole soit implémenté par un serveur de calcul distant, et avant que l'individu ne se présente au point de contrôle, permet de ne pas gêner l'individu. La mise en oeuvre du protocole peut en effet avoir lieu pendant que l'individu progresse en direction du point de contrôle, et l'individu peut recevoir les éléments transmis par le serveur de calcul 3 avant de parvenir au point de contrôle.

Le procédé comprend ensuite une deuxième série d'étapes 200 qui est mise en oeuvre lorsque l'individu se présente au niveau du point de contrôle de l'autorité de contrôle. Cette deuxième série d'étapes est une vérification par l'autorité de contrôle que l'étape de vérification biométrique 130 a été correctement mise en oeuvre, et elle est mise en oeuvre comme suit.

Le dispositif client 2 transmet à l'unité de traitement 4 de l'autorité de contrôle, au cours d'une étape 210, le résultat y du calcul de la vérification, la donnée biométrique b ayant permis de réaliser cette vérification, ainsi que la preuve $\pi$ de l'exactitude du résultat du calcul.

Ces éléments peuvent être communiqués à l'unité de traitement par un réseau sans fil type Wifi ou réseau de télécommunication. En variante ils peuvent être affichés sur un écran du dispositif personnel, par exemple sous forme de code, typiquement un code-barres bidimensionnel. Ce code peut être acquis par l'interface 41 de l'unité de traitement. Ils peuvent alternativement être communiqués via des interfaces physiques de l'unité de traitement et du dispositif de contrôle.

Avantageusement, mais facultativement, pour conférer au procédé une sécurité supplémentaire, une donnée biométrique fraiche b' est acquise sur l'individu par l'unité de traitement 4 de l'autorité de contrôle lors de la même étape.

Dans ce cas, le procédé comprend également une étape 220 d'authentification biométrique de l'individu, mise en oeuvre par l'unité de traitement 4, par comparaison de la donnée biométrique b avec la donnée fraiche b'. Cette comparaison permet de s'assurer que le dispositif client 2 qui stocke les données b, y et $\pi$ communiquées à l'unité de traitement 4 n'a pas été volé à l'individu qui a été identifié.

Si l'authentification est satisfaite, ou en l'absence d'authentification, le procédé comprend ensuite une étape 230 de vérification de l'exactitude du résultat de l'identification par l'unité de traitement 4.

Dans le cas du protocole Pinocchio, cette étape est mise en oeuvre grâce à la clé publique de vérification $VK_F$, la preuve $\pi$, la donnée biométrique b, et le résultat booléen y (cf section 2.3 de la publication citée ci-avant).

Cette étape de vérification est mise en oeuvre en un temps beaucoup plus court que le temps nécessaire à la vérification que l'individu appartient à la liste des individus autorisés, typiquement inférieur à 0,1 seconde voire à 0,05 seconde, tandis qu'une étape de vérification ou d'identification biométrique classique comprenant l'acquisition d'une donnée biométrique fraîche prend un temps de l'ordre de 20 secondes pour un utilisateur expérimenté, la partie la plus consommatrice de temps étant la lecture des données stockées dans passeport biométrique..

Par conséquent le temps d'arrêt de chaque individu au point de contrôle est réduit et la longueur de la file d'attente au point de contrôle est réduite également.

Si l'unité de traitement 4 détermine que la vérification 130 du droit d'accès de l'individu a été exactement réalisée et que l'individu dispose d'un droit d'accès (en ayant une donnée dans la liste des données biométriques de référence), elle autorise 240 le franchissement du point de contrôle à l'individu. Par exemple, elle peut commander l'ouverture d'une barrière ou d'un portique, ou activer l'émission d'un signal sonore ou visuel.

Dans le cas où la vérification n'a pas été correctement réalisée ou que l'individu ne dispose pas du droit d'accès, le franchissement du point de contrôle est interdit 240 et l'individu peut être redirigé pour un contrôle supplémentaire.

## Revendications

1. Procédé de vérification d'un droit d'accès d'un individu à une zone délimitée par au moins un point de contrôle géré par une autorité de contrôle, **caractérisé en ce qu'**il comprend la mise en oeuvre, avant que l'individu ne se présente au point de contrôle, des étapes suivantes:

   - acquisition (110), par un dispositif client (2), d'une donnée biométrique (b) sur l'individu, et transmission (120) de ladite donnée à un serveur de calcul distant (3),
   - mise en oeuvre (130), par le serveur de calcul distant (3), d'un protocole de calcul qui d'une part est vérifiable publiquement et qui d'autre part est à divulgation nulle de connaissance, le protocole de calcul comprenant :

      ∘ le calcul d'une fonction comprenant un calcul de distance entre la donnée biométrique acquise sur l'individu et chacune d'une pluralité de données biométriques de référence, la comparaison de chaque distance à un seuil prédéterminé, et la génération d'un résultat (y) indiquant si au moins l'une des distances calculées est inférieure audit seuil, et
      ∘ la génération, à partir de ladite fonction, d'une preuve ($\pi$) d'exactitude du calcul de la fonction,

   - transmission (140), par le serveur de calcul distant (3), du résultat (y) du calcul de la fonction et de la preuve ($\pi$) d'exactitude du calcul au dispositif client (2),

et le procédé comprend la mise en oeuvre des étapes suivantes, lorsque l'individu se présente au point de contrôle:

   - transmission (210), par le dispositif client (2), de la donnée biométrique (b) acquise sur l'individu, du résultat (y) du calcul de la fonction et de la preuve ($\pi$) d'exactitude du calcul à une unité de traitement (4) de l'autorité de contrôle, et
   - vérification (230), par l'unité de traitement (4) de l'autorité de contrôle, de l'exactitude du résultat (y), à partir dudit résultat (y), de la donnée biométrique (b) et de la preuve ($\pi$).

2. Procédé de vérification d'un droit d'accès selon la revendication 1, dans lequel l'autorité de contrôle autorise (240) le franchissement du point de contrôle par l'individu si le résultat du calcul de la fonction est exact.

3. Procédé de vérification d'un droit d'accès selon l'une des revendications 1 ou 2, dans lequel le protocole de calcul vérifiable à divulgation nulle de connaissance est le protocole dit Pinocchio ou le protocole dit Gepetto.

4. Procédé de vérification d'un droit d'accès selon l'une des revendications 1 à 3, comprenant en outre une étape préliminaire (50) d'enrôlement au cours de laquelle le dispositif client (2) transmet au serveur de calcul distant (3) au moins une donnée d'identité de l'individu et une donnée biométrique de l'individu certifiée par l'autorité de contrôle, et le serveur de calcul (3) enregistre la donnée biométrique de l'individu comme donnée biométrique de référence.

5. Procédé de vérification d'un droit d'accès selon la revendication 4, comprenant en outre la mise en oeuvre d'au moins une vérification de sécurité à partir de la donnée d'identité de l'individu et/ou de la donnée biométrique de l'individu obtenue à partir du document d'identité.

6. Procédé de vérification d'un droit d'accès selon l'une des revendications précédentes, dans lequel l'étape de transmission (120) de la donnée biométrique (b) acquise sur l'individu au serveur de calcul distant (3) est mise en oeuvre de manière sécurisée.

7. Procédé de vérification d'un droit d'accès selon l'une des revendications précédentes, dans lequel l'autorité de contrôle est une autorité douanière ou une entreprise de transport.

**8.** Procédé de vérification d'un droit d'accès selon l'une des revendications précédentes, comprenant en outre, lorsque l'individu se présente au point de contrôle de l'autorité de contrôle, une étape (220) au cours de laquelle l'unité de traitement (4) de l'autorité de contrôle acquiert une donnée biométrique (b') sur l'individu et compare ladite donnée à la donnée transmise par le dispositif client, l'étape de vérification (230) du résultat du calcul de la fonction n'étant mise en oeuvre qu'en cas de correspondance desdites données.

**9.** Système (1) de vérification d'un droit d'accès d'un individu, comprenant :

- un serveur de calcul (3), comprenant un calculateur (30) et une interface de communication à distance (31), le calculateur étant adapté pour calculer une fonction comprenant un calcul de distance entre au moins deux données biométriques, et la comparaison de chaque distance à un seuil prédéterminé, et pour générer une preuve ($\pi$) d'exactitude du calcul de la fonction ,
- une unité de traitement (4) adaptée pour effectuer une vérification du calcul de la fonction à partir de la preuve d'exactitude ($\pi$) et du résultat (y) du calcul, et
- un dispositif client (2), adapté pour acquérir une donnée biométrique sur un individu et pour communiquer avec le serveur de calcul et l'unité de traitement,

ledit système étant adapté pour la mise en oeuvre du procédé selon l'une des revendications qui précèdent.

**10.** Produit programme d'ordinateur, comprenant des instructions de code pour la mise en oeuvre d'un procédé comprenant des étapes de :

- acquisition (110) d'une image d'un trait biométrique et génération à partir de ladite image d'une donnée biométrique (b),
- transmission (120) à un serveur distant (3) de ladite donnée biométrique (b),
- réception d'un résultat de calcul (y) d'une fonction par le serveur distant et d'une preuve d'exactitude ($\pi$) du résultat, et
- transmission (210) de la donnée biométrique (b), du résultat de calcul (y) et de la preuve ($\pi$) à une unité de traitement,

quand il est mis en oeuvre par un calculateur (20).

**Fig. 1**

50 ———▶ Enrôlement

100

110 Acquisition donnée biométrique b

120 Transmission donnée biométrique b au serveur distant

130 Vérification du droit d'accès par protocole publiquement vérifiable à divulgation nulle de connaissance

140 Transmission y, π au dispositif client

200

210 Transmission b, y, π (b') à autorité de contrôle

220 Authentification biométrique b=b'

230 Vérification du résultat de la vérification du droit d'accès

240 Autorisation ou interdiction franchissement du point de contrôle

**Fig. 2**

Europäisches
Patentamt

European
Patent Office

Office européen
des brevets

# RAPPORT DE RECHERCHE EUROPEENNE

Numéro de la demande

EP 17 17 4171

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 8 925 058 B1 (DOTAN YEDIDYA [IL] ET AL) 30 décembre 2014 (2014-12-30) * colonne 3, ligne 37 - colonne 8, ligne 37 * * figures * | 1-10 | INV. G07C9/00 H04L9/32 H04L29/06 G06F21/32 G06Q50/26 G06Q10/00 |
| X | US 2009/164798 A1 (GUPTA SHEKHAR [US]) 25 juin 2009 (2009-06-25) * page 1, alinéa 13 - page 5, alinéa 50 * | 1-10 | |
| X | BRINGER JULIEN ET AL: "Some applications of verifiable computation to biometric verification", 2015 IEEE INTERNATIONAL WORKSHOP ON INFORMATION FORENSICS AND SECURITY (WIFS), IEEE, 16 novembre 2015 (2015-11-16), pages 1-6, XP032840440, DOI: 10.1109/WIFS.2015.7368568 * le document en entier * | 1-10 | |
| A | CRAIG COSTELLO ET AL: "Geppetto: Versatile Verifiable Computation", INTERNATIONAL ASSOCIATION FOR CRYPTOLOGIC RESEARCH,, vol. 20141201:093827, 1 décembre 2014 (2014-12-01), pages 1-22, XP061017488, * le document en entier * | 1-10 | DOMAINES TECHNIQUES RECHERCHES (IPC) G07C H04L G07B G06Q G06F |

Le présent rapport a été établi pour toutes les revendications

| Lieu de la recherche | Date d'achèvement de la recherche | Examinateur |
|---|---|---|
| La Haye | 5 juillet 2017 | Rachkov, Vassil |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 17 4171

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-07-2017

| Document brevet cité au rapport de recherche | | Date de publication | Membre(s) de la famille de brevet(s) | Date de publication |
|---|---|---|---|---|
| US 8925058 | B1 | 30-12-2014 | AUCUN | |
| US 2009164798 | A1 | 25-06-2009 | AUCUN | |

Pour tout renseignement concernant cette annexe : voir Journal Officiel de l'Office européen des brevets, No.12/82

EPO FORM P0460

**Documents brevets cités dans la description**

- FR 1560942

**Littérature non-brevet citée dans la description**

- **BRYAN PARNO ; CRAIG GENTRY ; JON HOWELL ; MARIANA RAYKOVA.** Pinocchio: Nearly Practical Verifiable Computation, in Proceedings of the IEEE Symposium on Security and Privacy. IEEE, 21 Mai 2013

- Geppetto: Versatile Verifiable Computation. **CRAIG COSTELLO ; CEDRIC FOURNET ; JON HOWELL ; MARKULF KOHLWEISS ; BENJAMIN KREUTER ; MICHAEL NAEHRIG ; BRYAN PARNO ; SAMEE ZAHUR.** Proceedings of the IEEE Symposium on Security and Privacy. IEEE, 18 Mai 2015